# EUROPEAN PATENT SPECIFICATION

(11) **EP 3 701 478 B1**
(45) Date of publication and mention of the grant of the patent: **01.07.2026**
(21) Application number: 18869539.9
(22) Date of filing: 19.10.2018
(51) Int. Cl.: G06Q 30/02

(54) **WEBSITE TRAFFIC TRACKING SYSTEM**
SYSTEM ZUR VERFOLGUNG VON WEBSITE-VERKEHR
SYSTÈME DE SUIVI DE TRAFIC DE SITE WEB

(30) Priority: 26.10.2017 US 201762577526 P
(43) Date of publication of application: 02.09.2020
(73) Proprietor: The Carlisle Companies, LLC, Chesterfield, MO 63017 (US)
(72) Inventor: LINIHAN, Jeffrey, Chesterfield MO 63017 (US)
(74) Representative: J A Kemp LLP
(86) International application number: PCT/US2018/056732
(87) International publication number: WO 2019/083848

(56) References cited:
- WO-A2-2016/071718
- US-A1- 2011 197 242
- US-A1- 2013 173 379
- US-A1- 2016 073 143
- US-A1- 2017 200 199

## Description

### CROSS REFERENCE TO RELATED APPLICATIONS

The present application claims the benefit of priority to U.S. Provisional Patent Application No. 62/577,526 filed October 26, 2017.

### BACKGROUND

Internet search engines rely on users submitting search terms for products, services, and the like. The search engines examine the search terms and compare the search terms to keywords associated with different websites. Those websites having keywords that more closely match the search terms and/or have higher quality metrics (e.g., based on click through rates or other values) are provided in a list or other order to the searching users.

Some search engine systems that provide the functionalities of the search engines also track web traffic to the websites. For example, the systems that operate the search engines can count or otherwise monitor how often searching users are clicking on or otherwise accessing websites provided in the search results. Tracking how often users visit websites through the search results can provide valuable insight into the popularity of the websites. Less popular websites can cause the owners of the websites to improve on the appearance, content, keywords, etc., of the websites in an attempt to drive more web traffic (e.g., visitors) to the sites.

Some websites are associated with products, services, and/or entities that also are featured in promotional events, such as commercials airing on television. Consumer interest in the products, services, and/or entities may increase during and/or shortly after these commercials air. Such increased interest can drive more users to the websites, but it can be difficult to identify or quantify the increased traffic. For example, since it may not be known when the commercials are airing (e.g., on a television), it can be difficult to accurately track whether increases in web traffic to a website are due to the airing of commercials or due to some other external factors. As a result, the efficacy of the commercials to increase web traffic to the websites can be difficult to accurately measure. WO 2016/071718 A2 describes the monitoring of media streams and influencing of Internet search results.

### SUMMARY

Aspects of the present disclosure involves systems, methods, and/or non-transitory computer readable mediums for tracking web-accessible content. The system, method, and/or non-transitory computer readable medium of the invention include receiving a first signal, at one or more processors of a computing system, that indicates automatic detection of presentation of a commercial on one or more electronic devices, wherein one or more of a product, a service, or an entity is presented in the commercial. The system, method, and/or non-transitory computer readable medium of the invention further include in response to the first signal, communicating, using the one or more processors of the computing system, a second signal to a second computing system that provides search results to Internet searches conducted by searching computers connected with the second computing system. The system, method, and/or non-transitory computer readable medium of the invention further include in response to communicating the second signal, receiving, at the one or more processors of the computing system, a third signal from the second computing system, the third signal determining whether web traffic to a website associated with the one or more of the product, the service, or the entity changed following presentation of the commercial The system, method, and/or non-transitory computer readable medium of the invention further include, in response to the web traffic not increasing or not increasing by a designated amount following the presentation of the commercial, automatically modifying the website associated with the commercial.

### BRIEF DESCRIPTION OF THE DRAWINGS

The various aspects, features and embodiments of processor, architectural structure, and its method of operation will be better understood when read in conjunction with the figures provided. Embodiments are provided in the figures for the purpose of illustrating aspects, features and/or various embodiments of the processor, architectural structure and method of operation, but the claims should not be limited to the precise arrangement, structures, features, aspects, embodiments or devices shown, and the arrangements, structures, subassemblies, features, aspects, embodiments, methods, and devices shown may be used singularly or in combination with other arrangements, structures, subassemblies, features, aspects, embodiments, methods and devices.
Figure 1 illustrates one embodiment of computing network including a tracking system, according to aspects of the present disclosure;
Figure 2 illustrates an embodiment of operation of the tracking system shown in Figure 1, according to aspects of the present disclosure; and
Figure 3 illustrates a flowchart a method for tracking web traffic to a website in coordination with promotional events, according to aspects of the present disclosure.
Figure 4 illustrates a flowchart of another method for tracking web traffic to a website in coordination with promotional events, according to aspects of the present disclosure.
Figure 5 illustrates an example computing device, according to aspects of the present disclosure.

### DETAILED DESCRIPTION

Research has shown that there is a link between an individual observing a broadcast, such a commercial (e.g., via television, cable, or radio), and that same individual (or an individual influenced by that individual) using a second device (such as a smart phone, tablet, computer, etc.) to access content related to the original broadcast or commercial (or program). In many cases, such access takes the form of an Internet search, but can also take the form of display (e.g., banner) advertising or video advertising targeted at the individual.

To date, advertisers have been limited in their ability to trace the correlation of online advertising to individuals watching broadcast messages, particularly in an automated and intelligent manner. Options available to the advertisers have included inefficient and ineffective mechanisms that only loosely coordinate online advertising with specific broadcasts. For example, typical mechanisms require an advertiser to monitor the viewing behavior of millions of individuals viewing a broadcast across an array of different television channels and program offerings and separately and independently track online activity of the individuals. Subsequent to obtaining the independent streams of data, the advertiser must process and/or analyze the data to identify any correlations. Such mechanisms are technically limited because they cannot automatically, and in real-time, determine whether an individual, in response to a broadcast, accessed or attempted to access online advertising content (e.g., accessed a website, mobile application(s) and related content, web content, and/or the like) associated with the broadcast, using for example a mobile device. And the use of such technically limited approaches results in the compiling of independent silos of inaccurate or incomplete data and do not specifically identify specific factors or characteristics (e.g., temporal) of the advertisement that caused the viewers to engage in the online activity or other network activity. Thus, while broadcast advertising (e.g., a commercial) can reach millions of viewers, using existing technologies, the advertiser is limited in their ability to understand the effectiveness of the broadcast, and more specifically, determining whether broadcast advertisement actually caused individuals to engage in online activities associated with the broadcast and/or a product associated with the broadcast advertisement.

Accordingly, to address the specific technical limitation of not being able to correlate targeted online advertising and online user activity with specific broadcast advertisements (among other technical problems), the disclosed system uses an inaudible audio watermark (e.g., the trigger) to communicate the start (and possibly end) of a commercial message (or even program). Based on the audio watermark, the disclosed system can then dynamically make changes to online advertising targeting settings. These settings may include, but are not limited to, bid amounts for keyword searching, geolocation targeting of advertisements (e.g., where advertisements are shown), preferred online advertisement (e.g., replacing one advertisement for another), placement (e.g., the medium and/or location in which the advertisement is shown), creative (e.g., the content of the advertisement), etc. The system temporarily adjusts the appropriate settings to increase or maximize the opportunity of the advertisers to deliver online advertising message to the individual consuming the broadcast, who then accesses (or causes others to access) online content related to the advertiser when the individual is most open to the message of the advertiser.

In a typical usage scenario, a broadcast message (possibly a commercial, or a program or a target component of a program) is transmitted to an individual via over-the-air transmission, satellite transmission, a cable operator, or an over-the-top broadcast provider). The message can be an audio and/or video message or an audio message only. The transmission could also include future broadcast experiences such as augmented reality, virtual reality, 360 immersive experiences, etc.

At specific points of the broadcast message, inaudible watermarks (e.g., the tag) are placed in the broadcast message to be observed by one or more sensing devices. These inaudible watermarks are described in the patents below. The specifics of the data observed, collected, and re-transmitted by the sensing devices can be of a varied nature and may (or may not) be encrypted (e.g., using one or more cyphers). The data may be a serial number that has no meaning without a reference database, may be descriptive data in and of itself, may be a combination of reference data plus context data (such as but not limited to) market placement in the broadcast message or any other detail that could be useful, or the like.

Once a tag is observed by one or more sensing devices, the sensing device may store a history of the observations (e.g., of the tag) locally and/or transmit the observations to a centralized tracking system. The observations of respective tags can be sent in batch form or in real-time (or near real-time) as the observations occur. The sensing devices may be placed in specific geographic areas to monitor local broadcast media as well as placed in central locations to monitor national media. As smart phones and digital assistant devices become more prevalent (and more effective), the sensing devices may move from these aggregate locations to more effectively identify specific geolocations, businesses, or households.

After a tag observation is received by the tracking system, online tracking instructions are retrieved from a database (note that the instructions can relate to one or more online advertising channels, such as search engine marketing, programmatic display advertising, programmatic online video advertising, etc.). In one embodiment, the tracking system stores the incident of the tag observation(s) along with any appropriate metadata, such as creative version, location, message, call to action, broadcast outlet, message for, etc.

In one embodiment, if there are specific online advertising platforms or web site properties identified as being associated with the collection of tags, the tracking system may connect to and extract data related to individual engagement with such advertising platforms or web site properties. For example, such information may include information articulating online advertising interaction (e.g., a user interacting with an advertisement), web site property visit, time on site, pages viewed, search engine terms, etc. Such information can help correlate the online activity of multiple individuals with broadcast messages that likely initiated the activity. Additionally, if online advertising is employed, the correlation would be between the broadcast message and the online advertising interaction as well.

Thus, aspects of the present disclosure provide website traffic tracking systems and methods that automatically determine when a commercial or other promotion of a product, service, and/or entity airs and, responsive to determining that the promotion has aired or is airing, automatically examines web traffic or changes in web traffic to websites associated with the product, service, and/or entity. The web traffic can be a number of times that the websites are viewed or otherwise accessed. Examining web traffic or changes in web traffic following the airing of a broadcast of a commercial can help determine how effective the commercial is in driving users and potential customers to the websites of the products, services, and/or entities featured in the commercials. Although the examples described herein focus on websites, the disclosure is not so limited. It is contemplated that the disclosed system may examine other type of web-accessible content, such any information included in a web page, web application, mobile application, and/or other network-accessible content, and such information may include text, images, audio, code or markup that defines structure, presentation, etc., of such content.

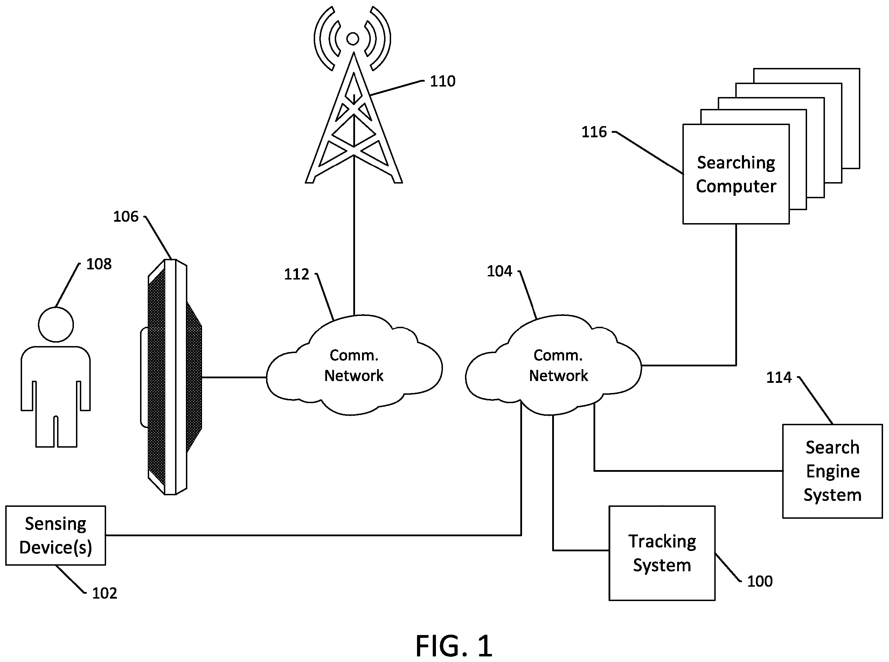

Figure 1 illustrates one embodiment of a website traffic tracking system 100. The tracking system 100 represents hardware circuitry that includes and/or is connected with one or more computer processors (e.g., one or more microprocessors, integrated circuits, and/or field programmable gate arrays) that perform the operations described herein in connection with the tracking system 100. The tracking system 100 communicates with an electronic sensing device 102 via one or more computer communication networks 104. The network(s) 104 may include one or more wireless networks such as, but not limited to, one or more of a Local Area Network (LAN), Wireless Local Area Network (WLAN), a Personal Area Network (PAN), Campus Area Network (CAN), a Metropolitan Area Network (MAN), a Wide Area Network (WAN), a Wireless Wide Area Network (VWVAN), Global System for Mobile Communications (GSM), Personal Communications Service (PCS), Digital Advanced Mobile Phone Service (D-Amps), Bluetooth, Wi-Fi, Fixed Wireless Data, 2G, 2.5G, 3G, 4G, LTE networks, 5G, enhanced data rates for GSM evolution (EDGE), General packet radio service (GPRS), enhanced GPRS, messaging protocols such as, TCP/IP, SMS, MMS, extensible messaging and presence protocol (XMPP), real time messaging protocol (RTMP), instant messaging and presence protocol (IMPP), instant messaging, USSD, IRC, or any other wireless data networks or messaging protocols. Network 130 may also include wired networks.

The sensing device 102 may be or otherwise include one or more mobile phones, tablet computers, desktop computers, or other processing device(s) that automatically detects the presentation of a promotional event, such as a promotional event included in a commercial being broadcast on television. In one specific example, the sensing device 102 can be a smart home appliance or apparatus, such as the AMAZON ECHO or the GOOGLE HOME devices. The promotional event can be the visual display of a commercial for a product, service, entity, etc., on an electronic presentation device 106, the audible mention or reference to the product, service, entity, etc. (e.g., on the presentation device 106, by a person 108, or the like), the audible presentation of a commercial for the product, service, entity, etc. (e.g., on a radio, podcast, or other non-visual manner of presenting the commercial), or the like. The promotional event can be presented in a video data and/or audio data such as a video commercial, an audible commercial (e.g., radio commercial), or the like.

The electronic presentation device 106 may be or otherwise include one or more televisions; movie theater screens; scoreboards, jumbotrons, or other displays in a place configured for large gatherings or persons (e.g., sports or concert stadiums); radios; speakers; computers; or the like. In one embodiment, the sensing device 102 and the presentation device 106 are the same device. For example, the presentation device 106 can be a mobile phone, tablet computer, television, or the like, that both presents a commercial and detects presentation of the commercial.

In one specific example, the sensing device 102 may detect a promotional event that includes an audible mention or reference to the product, service, or entity that does not occur or is not presented through the presentation device 106. For example, the sensing device 102 can automatically detect when the person 108 audibly states or refers to the product, service, or entity.

In another example, the sensing device 102 may detect the presentation of the promotional event by automatically detecting the presence of auxiliary data in connection with the presentation of the promotional event. This auxiliary data also can be referred to as a trigger or trigger data. The auxiliary data can be embedded within the presentation of the promotional event. For example, the auxiliary data can be imperceptibly encoded or otherwise included in a video signal and/or audio signal communicated to the presentation device 106 by a signal source system 110, such as a television or radio broadcast center, one or more computers, etc. The signal source system 110 can send the signal(s) to the presentation device 106 via one or more networks 112 of wired and/or wireless connections with the presentation device 106. In one embodiment, the network(s) 112 can be included in or be the same as the network(s) 104 used by the tracking system 100 and the sensing device 102 for communication. Alternatively, the networks 104, 112 can be completely separate networks that do not share any of the same networking devices (e.g., cables, wireless connections, routers, modems, antennas, etc.).

The sensing device 102 can include a microphone and/or camera (or other optical sensor) that detects the auxiliary data embedded in the presentation of the promotional event. Alternatively, the auxiliary data may not be included in the video and/or audio signal(s) sent from the signal source system 110, but may be communicated from the signal source system 110 to the sensing device 102 and/or the presentation device 106 with the video and/or audio signals. For example, the auxiliary data may be included in one or more separate data packets than the data representative of the video and/or audio signal(s) sent from the signal source system 110 to the presentation device 106. The separate auxiliary data can be communicated at the same time as (e.g., concurrently and/or simultaneously with) the video and/or audio signals sent from the signal source system 110, or may be communicated at an earlier time to notify the sensing device 102 when the promotional event will be presented.

The sensing device 102 can visually, optically, or audibly detect the auxiliary data as described one or more of U.S. Patent No. 7,650,624, titled "Method And Apparatus For Modulating A Video Signal With Data"; U.S. Patent No. 8,646,683, titled "Method And System For Device Notification"; U.S. Patent No. 6,229,572, titled "Method For Transmitting Data On Viewable Portion Of A Video Signal"; U.S. Patent No. 6,661,905, titled "Method For Transmitting Data On A Viewable Portion Of A Video Signal"; U.S. Patent No. 7,296,282, titled "Interactive Optical Cards And Other Hand-Held Devices With Increased Connectivity"; U.S. Patent No. 7,116,374, titled "Method And System For Enhanced Modulation Of Video Signals"; U.S. Patent No. 7,664,175, titled "Mark-based Content Modulation And Detection"; U.S. Patent No. 7,974,438, titled "Spatial Data Encoding And Decoding"; U.S. Patent No. 7,587,121, titled "Method And System For Multiple Field Modulation"; U.S. Patent No. 8,582,781, titled "Echo Modulation Methods And Systems"; U.S. Patent No. 9,609,278, titled "Method And System For Auxiliary Data Detection And Delivery"; and/or U.S. Patent No. 8,571,257, titled "Method And System For Image Registration".

Responsive to detecting the auxiliary data, the sensing device 102 can automatically communicate a trigger or event signal to the tracking system 100 via the network(s) 104. This signal notifies the tracking system 100 that the promotional event is being presented or was recently presented (e.g., within a time period that is no greater than the time needed for processing of detection of the auxiliary data, communication of the signal via the network(s) 104, and processing of the signal by the tracking system 100). The tracking system 100 can then determine that the promotional event is being presented and can identify certain characteristics of the presentation of the promotional event.

The trigger or event signal sent from the sensing device 102 to the tracking system 100 can identify the promotional event and/or the product, service, and/or entity associated with the promotional event. Optionally, the trigger or event signal can include data indicative of a geographic location of where the presentation of the promotional event was detected by the sensing device 102. The geographic location can be a longitude/latitude component, a ZIP code, a town, county, state, etc. Upon receipt of the trigger or event signal, the tracking system 100 determines one or more keywords of interest associated with the promotional event having the presentation that was detected. The tracking system 100 can compare the product, service, or entity identified by the trigger or event signal with a list, table, or other memory structure in a database of the tracking system 100 that associates different sets of keywords of interest with different products, services, and/or entities. The tracking system 100 can identify one or more selected sets of keywords based on the comparison (e.g., by determining the keywords that are associated with the identified product, service, and/or entity).

The tracking system 100 may query a search engine system 114 to determine traffic or changes in traffic to one or more websites (or other web accessible content, such as mobile applications, mobile content, etc.) associated with the products, services, and/or entities featured in or otherwise associated with the promotional event. The search engine system 114 represents one or more computing devices that receive search terms from user computers 116 ("Searching Computer" in Figure 1) that are input by users at the computers 116 to find websites related to the search terms. One example of an entity that provides the functionality implemented via the search engine system 114 includes ALPHABET, INC., which provides the search engine google.com. Other entities may provide other Internet-based search engines.

The search engine system 114 is connected with the searching computers 116 by the network(s) 104. Optionally, the search engine system 114 can be connected with the searching computers 116 by one or more other, separate networks. The search engine system 114 tracks web traffic by the searching computers 116 to various websites. This tracking of web traffic can include services such as GOOGLE ANALYTICS. The search engine system 114 can monitor and record how many searching computers 116 are used to access a website at various times. Such information can be saved in a list, table, or other memory structure in a database or other tangible and non-transitory computer readable medium (e.g., computer hard drives, optical discs, etc.).

Responsive to the tracking system 100 determining that a commercial or other promotional event has aired, the tracking system 100 communicates a query signal to the search engine system 114 via the network(s) 104. This query signal requests identification of how web traffic to the website or websites of the products, services, and/or entities featured in the commercial is changing during or following the airing of the commercial.

The search engine system 114 responds to receipt of this query signal by determining the current web traffic and/or changes in the web traffic to the website(s) identified by the tracking system 100. The search engine system 114 can communicate a traffic signal to the tracking system 100 via the network(s) 104 that informs the tracking system 100 of the current web traffic and/or changes in the web traffic to the website(s). In another example, the search engine system may determine changes in other web-accessible content, such as mobile application content.

The tracking system 100 examines the traffic signal and/or otherwise reports the contents of the traffic signal to one or more users of the tracking system 100. Doing so allows the tracking system 100 to automatically correlate how commercials are, or are not, driving web traffic to the websites, and can modify or update the websites accordingly. For example, the websites and/or keywords associated with the websites (and used by the search engine system 114 to find the websites during searches) can be modified in response to the traffic not increasing or not decreasing by a designated amount following the airing of a commercial. The websites and/or keywords can be automatically modified by the tracking system 100, such as by changing a web address of the website, changing a layout of a website, and/or changing which keywords are associated with the website, in response to the web traffic not increasing or not increasing by the designated amount following the airing of a commercial. The changes can cause web traffic to websites for the entity, product, and/or service, which can increase in frequency following or during presentation of the commercial, to more prominently feature the website of the product, service, and/or entity.

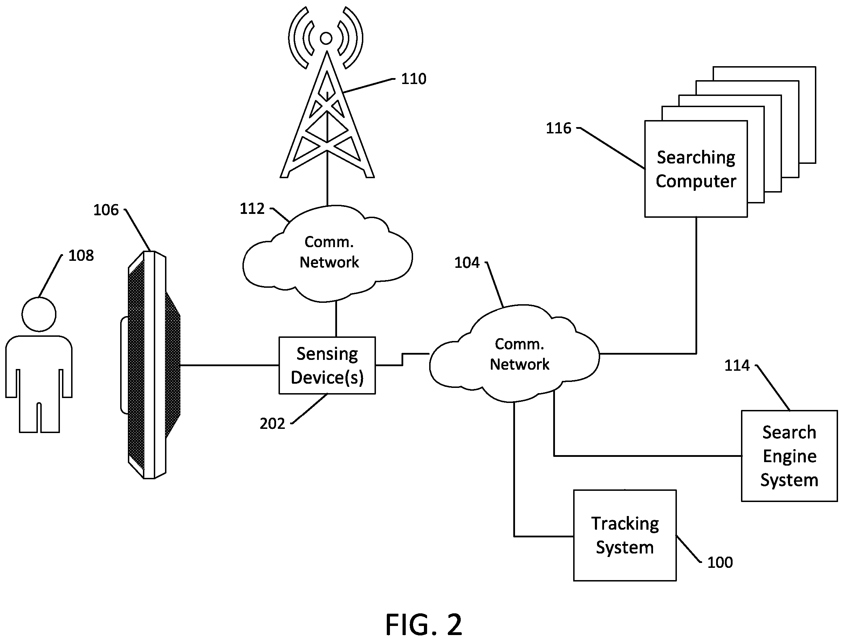

Figure 2 illustrates another embodiment of operation of the tracking system 100 shown in Figure 1. One difference between operation of the tracking system 100 in Figures 1 and 2 is that the video and/or audio signal(s) sent to the presentation device 106 may also be provided to a sensing device 202. The sensing device 202 can represent hardware circuitry that includes and/or is connected with one or more processors (e.g., one or more microprocessors, field programmable gate arrays, and/or integrated circuits) that receive the audio and/or video signal(s) and examine the signal(s) to determine if the auxiliary data is present. For example, the sensing device 202 can be a set top box, cable box, satellite television signal decoder, a digital video recorder, or the like. The sensing device 202 can examine the signal(s) sent from the signal source system 110 and determine if the auxiliary data referred to above is present.

If the auxiliary data is present, then the sensing device 202 sends the signal to the tracking system 100 to inform the tracking system 100 of the promotional event (and, optionally, to notify the tracking system 100 of the location of the presentation of the promotional event). The tracking system 100 then operates to monitor changes in web traffic to the website(s) associated with the commercial, as described above. Optionally, the tracking system 100 can monitor changes in web traffic to websites responsive to other types of promotional events, such as mentions of a product, service, and/or entity during a public speech or television event other than a commercial, during a promotional event at a sporting event, a mention of the product, service, and/or entity in a social media platform, or the like.

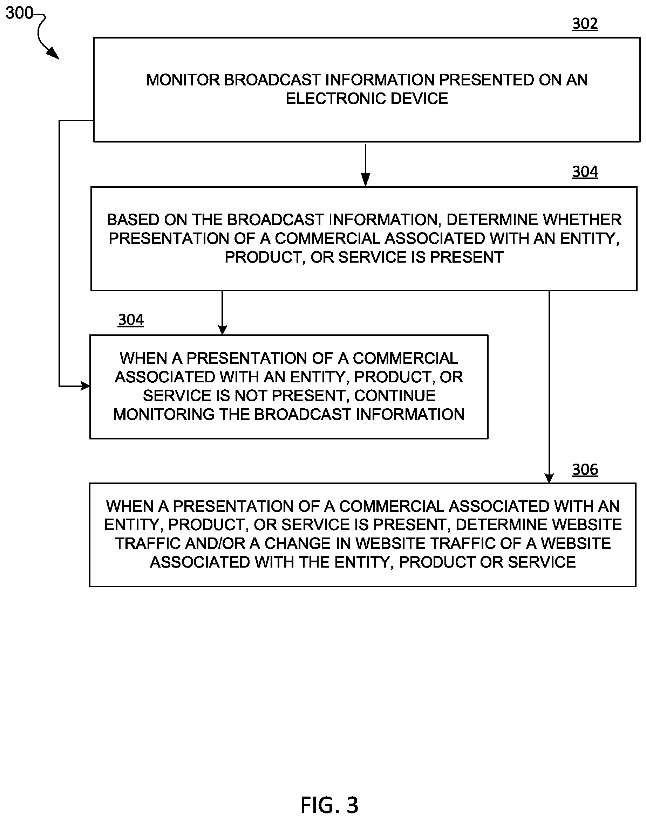

Figure 3 illustrates a flowchart of one embodiment of a method 300 for tracking web traffic to a website in coordination with promotional events. The method 300 describes operations performed in connection with the tracking system 100 described herein and in particular Figs. 1-2. The method 300 can represent the operations performed by the tracking system 100 and optionally the sensing device 102 described above. In one embodiment, the method 300 can represent an algorithm that can be used or referred to by a person of ordinary skill in the art to write or create one or more software applications that direct operations of the tracking system 100 and/or sensing device 102.

As illustrated, method 300 begins at 302, where broadcast information presented on an electronic device monitored. For example, the sensing device 102 can monitor presentation of television shows, movies, sporting events, computer programs, or the like, on the presentation device 106. At 304, a determination is made as to whether presentation of a commercial associated with an entity of interest is detected. For example, the sensing device 102 can determine if auxiliary data indicative of presentation of a commercial for a product and/or service offered by an entity is shown on the presentation device 106. When auxiliary data is detected, the method 300 proceeds at 306. Otherwise, the method 300 can returns to 302 for continuous monitoring of the information presented on the electronic device for detection of a presentation of a commercial of a promotional event.

At 306, traffic and/or a change in traffic to a website associated with the product, service, and/or entity featured in the commercial is determined. For example, the tracking system 100 may query the search engine system 114 after the commercial is detected to determine whether presentation of the commercial results in increased traffic to the website and/or how much traffic to the website increases.

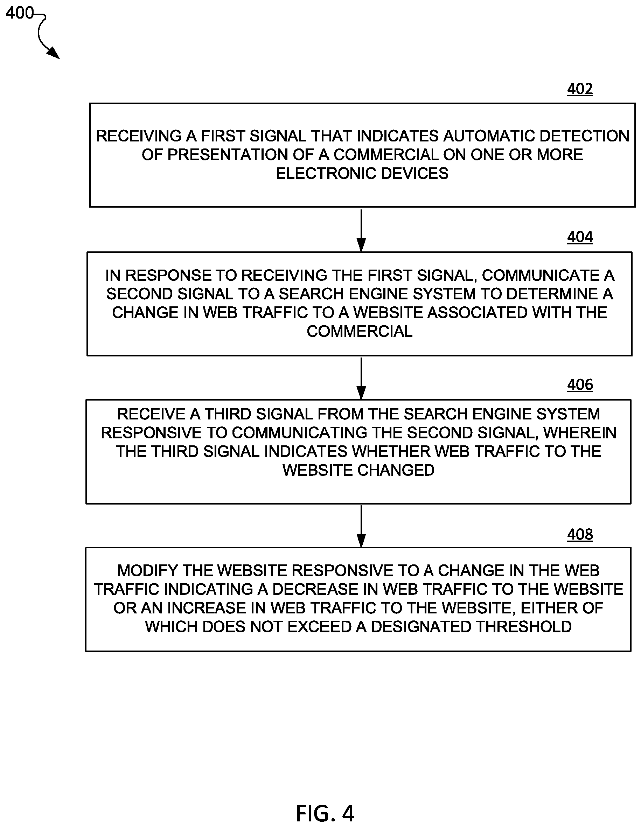

Fig. 4 provides an example an example method 400 that indicates automatic detection of presentation of a commercial on one or more electronic devices. The method 400 describes operations performed in connection with the tracking system 100 described herein and in particular Figs. 1-2.

As illustrated, the method 400 begins at 402 with receiving a first signal that indicates automatic detection of presentation of a commercial on one or more electronic devices. For example, the first signal may be received at the one or more processors of a tracking system from a sensing device that one or more of optically or audibly detects auxiliary data that is encoded in the commercial. Alternatively, the first signal may be received at the one or more processors of the tracking system from a sensing device through which a broadcast signal containing the commercial is communicated to a television for presenting the broadcast signal and the commercial.

At 404, in response to receiving the first signal, a change in web traffic to a website associated with the commercial is determined. For example, the change in web traffic may be determined by communicating a second signal to a search engine system that provides search results to users inputting search terms for one or more websites to the search engine system. A website is associated with the commercial when one or more of a product, service, or entity featured in the commercial is presented in the website.

At 406, a third signal is received from the search engine system responsive to communicating the second signal. The third signal indicates whether web traffic to a website associated with the one or more of the product, the service, or the entity changed following presentation of the commercial.

At 408, the website associated with the commercial is modified, responsive to the change in the web traffic indicating a decrease in the web traffic to the website or an increase in the web traffic to the website that does not exceed a designated increase.

At 410, the website is associated with the commercial when one or more of a product, service, or entity featured in the commercial is presented in the website.

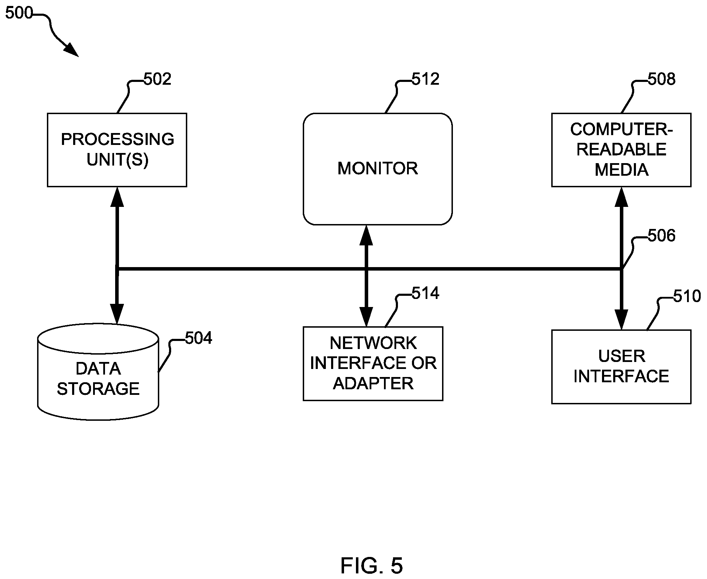

FIG. 5 illustrates an example of a suitable computing and networking environment 500 that may be used to implement various aspects of the present disclosure described in FIGS. 1-3, such as the server computing device 120. As illustrated, the computing and networking environment 500 includes a general purpose computing device 500, although it is contemplated that the networking environment 500 may include one or more other computing systems, such as personal computers, server computers, hand-held or laptop devices, tablet devices, multiprocessor systems, microprocessor-based systems, set top boxes, programmable consumer electronic devices, network PCs, minicomputers, mainframe computers, digital signal processors, state machines, logic circuitries, distributed computing environments that include any of the above computing systems or devices, and the like.

Components of the computer 500 may include various hardware components, such as a processing unit 502, a data storage 504 (e.g., a system memory), and a system bus 506 that couples various system components of the computer 500 to the processing unit 502. The system bus 506 may be any of several types of bus structures including a memory bus or memory controller, a peripheral bus, and a local bus using any of a variety of bus architectures. For example, such architectures may include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

The computer 500 may further include a variety of computer-readable media 508 that includes removable/non-removable media and volatile/nonvolatile media, but excludes transitory propagated signals. Computer-readable media 508 may also include computer storage media and communication media. Computer storage media includes removable/non-removable media and volatile/nonvolatile media implemented in any method or technology for storage of information, such as computer-readable instructions, data structures, program modules or other data, such as RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium that may be used to store the desired information/data and which may be accessed by the computer 500. Communication media includes computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. For example, communication media may include wired media such as a wired network or direct-wired connection and wireless media such as acoustic, RF, infrared, and/or other wireless media, or some combination thereof. Computer-readable media may be embodied as a computer program product, such as software stored on computer storage media.

The data storage or system memory 504 includes computer storage media in the form of volatile/nonvolatile memory such as read only memory (ROM) and random access memory (RAM). A basic input/output system (BIOS), containing the basic routines that help to transfer information between elements within the computer 500 (e.g., during start-up) is typically stored in ROM. RAM typically contains data and/or program modules that are immediately accessible to and/or presently being operated on by processing unit 502. For example, in one embodiment, data storage 504 holds an operating system, application programs, and other program modules and program data.

Data storage 504 may also include other removable/non-removable, volatile/nonvolatile computer storage media. For example, data storage 504 may be: a hard disk drive that reads from or writes to non-removable, nonvolatile magnetic media; a magnetic disk drive that reads from or writes to a removable, nonvolatile magnetic disk; and/or an optical disk drive that reads from or writes to a removable, nonvolatile optical disk such as a CD-ROM or other optical media. Other removable/non-removable, volatile/nonvolatile computer storage media may include magnetic tape cassettes, flash memory cards, digital versatile disks, digital video tape, solid state RAM, solid state ROM, and the like. The drives and their associated computer storage media, described above and illustrated in FIG. 5, provide storage of computer-readable instructions, data structures, program modules and other data for the computer 500.

A user may enter commands and information through a user interface 510 or other input devices such as a tablet, electronic digitizer, a microphone, keyboard, and/or pointing device, commonly referred to as mouse, trackball, or touch pad. Other input devices may include a joystick, game pad, satellite dish, scanner, or the like. Additionally, voice inputs, gesture inputs (e.g., via hands or fingers), or other natural user interfaces may also be used with the appropriate input devices, such as a microphone, camera, tablet, touch pad, glove, or other sensor. These and other input devices are often connected to the processing unit 502 through a user interface 510 that is coupled to the system bus 506, but may be connected by other interface and bus structures, such as a parallel port, game port or a universal serial bus (USB). A monitor 512 or other type of display device is also connected to the system bus 506 via an interface, such as a video interface. The monitor 512 may also be integrated with a touch-screen panel or the like.

The computer 500 may operate in a networked or cloud-computing environment using logical connections of a network interface or adapter 514 to one or more remote devices, such as a remote computer. The remote computer may be a personal computer, a server, a router, a network PC, a peer device or other common network node, and typically includes many or all of the elements described above relative to the computer 500. The logical connections depicted in FIG. 5 include one or more local area networks (LAN) and one or more wide area networks (WAN), but may also include other networks. Such networking environments are commonplace in offices, enterprise-wide computer networks, intranets and the Internet.

When used in a networked or cloud-computing environment, the computer 500 may be connected to a public and/or private network through the network interface or adapter 514. In such embodiments, a modem or other means for establishing communications over the network is connected to the system bus 506 via the network interface or adapter 514 or other appropriate mechanism. A wireless networking component including an interface and antenna may be coupled through a suitable device such as an access point or peer computer to a network. In a networked environment, program modules depicted relative to the computer 500, or portions thereof, may be stored in the remote memory storage device.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

## Claims

1. A method comprising:
receiving a first signal, at one or more processors of a computing system, that indicates automatic detection of presentation of a commercial on one or more electronic devices, wherein one or more of a product, a service, or an entity is presented in the commercial;
in response to the first signal, communicating, using the one or more processors (502) of the computing system (500), a second signal to a second computing system (114) that provides search results to Internet searches conducted by searching computers (116) connected with the second computing system (114);
in response to communicating the second signal, receiving, at the one or more processors (502) of the computing system (500), a third signal from the second computing system (114), the third signal determining whether web traffic to a website associated with the one or more of the product, the service, or the entity changed following presentation of the commercial; and,
in response to the web traffic not increasing or not increasing by a designated amount following the presentation of the commercial, automatically modifying the website associated with the commercial.

2. The method of claim 1, wherein the first signal is received from a sensing device (102) that at least one of optically detect and audibly detects auxiliary data that is imperceptibly encoded in the commercial.

3. The method of claim 1 or 2, wherein the first signal is received from a sensing device (102) through which a broadcast signal containing the commercial is communicated to a television (106) for presenting the broadcast signal and the commercial.

4. The method of any one of claims 1 to 3, wherein the website is associated with the commercial when one or more of a product, service, or entity featured in the commercial is presented in the website.

5. A system (100) comprising:
a computing device (500) comprising:
a memory (504); and
one or more processors (502) in operative communication with the memory (504) configured to:
receive a first signal that indicates automatic detection of presentation of a commercial on one or more electronic devices (106), wherein one or more of a product, a service, or an entity is presented in the commercial;
in response to the first signal, communicate a second signal to a search engine system (114) that provides search results to Internet searches conducted by searching computers (116) connected with the search engine system (114) at least partially via the Internet;
in response to communicating the second signal, receive a third signal from the search engine system (114), the third signal indicating whether web traffic to a website associated with the one or more of the product, the service, or the entity changed following presentation of the commercial; and
automatically modify the website associated with the commercial in response to the change in the web traffic not indicating an increase in the web traffic to the website or indicating an increase in the web traffic to the website does not exceed a designated amount of increase following the presentation of the commercial.

6. The system of claim 5, wherein the one or more processors (502) receive the first signal from a sensing device (202) that at least one of optically detects or audibly detects auxiliary data that is imperceptibly encoded in the commercial.

7. The system of claim 5 or 6, wherein the one or more processors (502) receive the first signal from a sensing device (202) through which a broadcast signal containing the commercial is communicated to a television for presenting the broadcast signal and the commercial.

8. The system of any one of claims 5 to 7, wherein the website is associated with the commercial when one or more of a product, service, or entity featured in the commercial is presented in the website.

9. A non-transitory computer-readable medium encoded with instructions executable by one or more computing devices, the instructions comprising:
receiving a first signal that indicates automatic detection of presentation of a commercial on one or more electronic devices, wherein one or more of a product, a service, or an entity is presented in the commercial;
in response to the first signal, communicating a second signal to a search engine system (114) that provides search results to Internet searches conducted by searching computers (116) connected with the search engine system (114) at least partially via the Internet; and in response to communicating the second signal, receiving a third signal from the search engine system (114), the third signal indicating whether web traffic to a website associated with the one or more of the product, the service, or the entity changed following presentation of the commercial; and,
in response to the web traffic not increasing or not increasing by a designated amount following the presentation of the commercial, automatically modifying the website associated with the commercial.

10. The non-transitory computer-readable medium of claim 9, wherein the first signal is received at one or more processors (502) of the computing system (100) from a sensing device (202) adapted to optically and/or audibly detect auxiliary data that is imperceptibly encoded in the commercial.

11. The non-transitory computer-readable medium of claim 9 or 10, wherein the first signal is received at the one or more processors (502) from a sensing device (202) that audibly detects auxiliary data that is audibly presented in the commercial.

12. The non-transitory computer-readable medium of any one of claims 9 to 11, wherein the first signal is received at the one or more processors (502) from a sensing device (102) through which a broadcast signal containing the commercial is communicated to a television (106) for presenting the broadcast signal and the commercial.

## Patentansprüche

1. Verfahren, das umfasst:
Empfangen eines ersten Signals, an einem oder mehreren Prozessoren eines Computersystems, das die automatische Erfassung der Präsentation eines Werbespots auf einer oder mehreren elektronischen Vorrichtungen anzeigt, wobei in dem Werbespot eines oder mehrere der Folgenden präsentiert werden: ein Produkt, eine Dienstleistung oder eine Entität;
als Reaktion auf das erste Signal, Übermitteln, durch Kommunikation des einen oder der mehreren Prozessoren (502) des Computersystems (500), eines zweiten Signals an ein zweites Computersystem (114), das Suchergebnisse für Internetsuchen bereitstellt, die von mit dem zweiten Computersystem (114) verbundenen Suchcomputern (116) durchgeführt werden;
als Reaktion auf die Kommunikation des zweiten Signals, Empfangen, an dem einen oder den mehreren Prozessoren (502) des Computersystems (500), eines dritten Signals von dem zweiten Computersystem (114), wobei das dritte Signal bestimmt, ob sich der Web-Traffic zu einer Website, die dem Produkt, der Dienstleistung oder der Entität zugeordnet ist, nach der Präsentation des Werbespots verändert hat; und
als Reaktion darauf, dass der Web-Traffic nach der Präsentation des Werbespots nicht oder nicht um einen festgelegten Betrag zunimmt, automatisches Modifizieren der mit dem Werbespot verbundenen Website.

2. Verfahren nach Anspruch 1, wobei das erste Signal von einer Erfassungsvorrichtung (102) empfangen wird, die Hilfsdaten, die unmerklich in dem Werbespot codiert sind, mindestens optisch oder akustisch erfasst.

3. Verfahren nach Anspruch 1 oder 2, wobei das erste Signal von einer Erfassungsvorrichtung (102) empfangen wird, über die die Kommunikation des den Werbespot enthaltenden Sendesignals an einen Fernseher (106) erfolgt, um das Sendesignal und den Werbespot zu präsentieren.

4. Verfahren nach einem der Ansprüche 1 bis 3, wobei die Website dem Werbespot zugeordnet ist, wenn eines oder mehrere der in dem Werbespot vorgestellten Produkte, Dienstleistungen oder Entitäten auf der Website präsentiert werden.

5. System (100), das umfasst:
eine Computervorrichtung (500), die umfasst:
einen Speicher (504); und
einen oder mehrere Prozessoren (502) in operativer Kommunikation mit dem Speicher (504), die für Folgendes konfiguriert sind:
Empfangen eines ersten Signals, das die automatische Erfassung der Präsentation eines Werbespots auf einer oder mehreren elektronischen Vorrichtungen (106) anzeigt, wobei in dem Werbespot eines oder mehrere der Folgenden präsentiert werden: ein Produkt, eine Dienstleistung oder eine Entität;
als Reaktion auf das erste Signal, Kommunizieren des zweiten Signals an ein Suchmaschinen-System (114), das Suchergebnisse für Internetsuchen bereitstellt, die von Suchcomputern (116) durchgeführt werden, die mindestens teilweise über das Internet mit dem Suchmaschinen-System (114) verbunden sind;
als Reaktion auf die Kommunikation des zweiten Signals, Empfangen eines dritten Signals von dem Suchmaschinen-System (114), wobei das dritte Signal anzeigt, ob sich der Web-Traffic zu einer Website, die dem Produkt, der Dienstleistung oder der Entität zugeordnet ist, nach der Präsentation des Werbespots verändert hat; und
automatisches Modifizieren der mit dem Werbespot verbundenen Website als Reaktion auf die Veränderung des Web-Traffics, die keinen Anstieg des Web-Traffics zu der Website anzeigt oder bei der der Anstieg des Web-Traffics zu der Website nach der Präsentation des Werbespots einen festgelegten Anstiegswert nicht überschreitet.

6. System nach Anspruch 5, wobei der eine oder die mehreren Prozessoren (502) das erste Signal von einer Erfassungsvorrichtung (202) empfangen, die mindestens entweder optisch oder akustisch Zusatzdaten erfasst, die unmerklich in dem Werbespot codiert sind.

7. System nach Anspruch 5 oder 6, wobei der eine oder die mehreren Prozessoren (502) das erste Signal von einer Erfassungsvorrichtung (202) empfangen, über die die Kommunikation des Sendesignals mit dem Werbespot an einen Fernseher erfolgt, um das Sendesignal und den Werbespot präsentieren.

8. System nach einem der Ansprüche 5 bis 7, wobei die Website dem Werbespot zugeordnet ist, wenn eines oder mehrere der in dem Werbespot vorgestellten Produkte, Dienstleistungen oder Entitäten auf der Website präsentiert werden.

9. Nicht-flüchtiges, computerlesbares Medium, das mit Anweisungen codiert ist, die von einer oder mehreren Computervorrichtungen ausgeführt werden können, wobei die Anweisungen umfassen:
Empfangen eines ersten Signals, das die automatische Erfassung der Präsentation eines Werbespots auf einer oder mehreren elektronischen Vorrichtungen anzeigt, wobei in dem Werbespot eines oder mehrere der Folgenden präsentiert werden: ein Produkt, eine Dienstleistung oder eine Entität;
als Reaktion auf das erste Signal, Kommunizieren des zweiten Signals an ein Suchmaschinen-System (114), das Suchergebnisse für Internetsuchen bereitstellt, die von Suchcomputern (116) durchgeführt werden, die mindestens teilweise über das Internet mit dem Suchmaschinen-System (114) verbunden sind; und als Reaktion auf die Kommunikation des zweiten Signals, Empfangen eines dritten Signals von dem Suchmaschinen-System (114), wobei das dritte Signal anzeigt, ob sich der Web-Traffic zu einer Website, die dem Produkt, der Dienstleistung oder der Entität zugeordnet ist, nach der Präsentation des Werbespots verändert hat; und
als Reaktion darauf, dass der Web-Traffic nach der Präsentation des Werbespots nicht oder nicht um einen festgelegten Betrag zunimmt, automatisches Modifizieren der mit dem Werbespot verbundenen Website.

10. Nicht-flüchtiges computerlesbares Medium nach Anspruch 9, wobei das erste Signal an einem oder mehreren Prozessoren (502) des Computersystems (100) von einer Erfassungsvorrichtung (202) empfangen wird, die dafür ausgelegt ist, Hilfsdaten, die unmerklich in dem Werbespot codiert sind, optisch und/oder akustisch zu erfassen.

11. Nicht-flüchtiges computerlesbares Medium nach Anspruch 9 oder 10, wobei das erste Signal an dem einen oder den mehreren Prozessoren (502) von einer Erfassungsvorrichtung (202) empfangen wird, die Hilfsdaten, die in dem Werbespot akustisch präsentiert werden, akustisch erfasst.

12. Nicht-flüchtiges, computerlesbares Medium nach einem der Ansprüche 9 bis 11, wobei das erste Signal an dem einen oder den mehreren Prozessoren (502) von einer Erfassungsvorrichtung (102) empfangen wird, über die die Kommunikation des den Werbespot enthaltenden Sendesignals an einen Fernseher (106) erfolgt, um das Sendesignal und den Werbespot zu präsentieren.

## Revendications

1. Procédé comprenant :
la réception, au niveau d'un ou plusieurs processeurs d'un système informatique, d'un premier signal indiquant la détection automatique de la présentation d'une publicité sur un ou plusieurs appareils électroniques ; un produit, un service et/ou une entité étant présentés dans cette publicité,
en réaction au premier signal, la transmission, au moyen du ou des processeurs (502) du système informatique (500), d'un deuxième signal à un deuxième système informatique (114) qui fournit des résultats à des recherches sur internet réalisées par des ordinateurs de recherche (116) connectés au deuxième système informatique (114),
en réaction à la transmission du deuxième signal, la réception, au niveau du ou des processeurs (502) du système informatique (500), d'un troisième signal provenant du deuxième système informatique (114), le troisième signal déterminant si le trafic web vers un site web associé au produit, au service et/ou à l'entité a changé à la suite de la présentation de la publicité, et
en réaction au fait que le trafic web n'augmente pas ou n'augmente pas dans les proportions escomptées à la suite de la présentation de la publicité, la modification automatique du site web associé à la publicité.

2. Procédé selon la revendication 1, dans lequel le premier signal est reçu en provenance d'un dispositif de détection (102) qui détecte, de manière optique et/ou sonore, des données auxiliaires codées de manière imperceptible dans la publicité.

3. Procédé selon la revendication 1 ou 2, dans lequel le premier signal est reçu en provenance d'un dispositif de détection (102) par l'intermédiaire duquel un signal de diffusion contenant la publicité est transmis à une télévision (106) afin de présenter le signal de diffusion et la publicité.

4. Procédé selon l'une quelconque des revendications 1 à 3, dans lequel le site web est associé à la publicité lorsqu'un produit, un service et/ou une entité figurant dans la publicité sont présentés sur le site web.

5. Système (100) comprenant :
un dispositif informatique (500) comprenant :
une mémoire (504), et
un ou plusieurs processeurs (502) en communication fonctionnelle avec la mémoire (504) et conçus pour :
recevoir un premier signal indiquant la détection automatique de la présentation d'une publicité sur un ou plusieurs appareils électroniques (106) ; un produit, un service et/ou une entité étant présentés dans cette publicité,
en réaction au premier signal, transmettre un deuxième signal à un système de moteur de recherche (114) qui fournit des résultats à des recherches sur internet réalisées par des ordinateurs de recherche (116) connectés au système de moteur de recherche (114) au moins partiellement par l'intermédiaire de l'internet,
en réaction à la transmission du deuxième signal, recevoir un troisième signal en provenance du moteur de recherche (114), le troisième signal indiquant si le trafic web vers un site web associé au produit, au service et/ou à l'entité a changé à la suite de la présentation de la publicité, et
modifier automatiquement le site web associé à la publicité en réaction au fait que le changement du trafic web n'indique pas d'augmentation du trafic web vers le site web ou indique qu'une augmentation du trafic web vers le site web ne s'effectue pas dans les proportions escomptées après la présentation de la publicité.

6. Système selon la revendication 5, dans lequel le ou les processeurs (502) reçoivent le premier signal en provenance d'un dispositif de détection (202) qui détecte, de manière optique et/ou sonore, des données auxiliaires codées de manière imperceptible dans la publicité.

7. Système selon la revendication 5 ou 6, dans lequel le ou les processeurs (502) reçoivent le premier signal en provenance d'un dispositif de détection (202) par l'intermédiaire duquel un signal de diffusion contenant la publicité est transmis à une télévision afin de présenter le signal de diffusion et la publicité.

8. Système selon l'une quelconque des revendications 5 à 7, dans lequel le site web est associé à la publicité lorsqu'un produit, un service et/ou une entité figurant dans la publicité sont présentés sur le site web.

9. Support non transitoire lisible par ordinateur, pourvu d'instructions codées exécutables par un ou plusieurs dispositifs informatiques, les instructions comprenant :
la réception d'un premier signal indiquant la détection automatique de la présentation d'une publicité sur un ou plusieurs appareils électroniques ; un produit, un service et/ou une entité étant présentés dans cette publicité,
en réaction au premier signal, la transmission d'un deuxième signal à un système de moteur de recherche (114) qui fournit des résultats à des recherches sur internet réalisées par des ordinateurs de recherche (116) connectés au système de moteur de recherche (114) au moins partiellement par l'intermédiaire de l'internet,
en réaction à la transmission du deuxième signal, la réception d'un troisième signal provenant du moteur de recherche (114), le troisième signal indiquant si le trafic web vers un site web associé au produit, au service et/ou à l'entité a changé à la suite de la présentation de la publicité, et
en réaction au fait que le trafic web n'augmente pas ou n'augmente pas dans les proportions escomptées à la suite de la présentation de la publicité, la modification automatique du site web associé à la publicité.

10. Support non transitoire lisible par ordinateur selon la revendication 9, dans lequel le premier signal est reçu au niveau d'un ou plusieurs processeurs (502) du système informatique (100) en provenance d'un dispositif de détection (202) adapté à la détection optique et/ou sonore de données auxiliaires qui sont codées de manière imperceptible dans la publicité.

11. Support non transitoire lisible par ordinateur selon la revendication 9 ou 10, dans lequel le premier signal est reçu au niveau du ou des processeurs (502) en provenance d'un dispositif de détection (202) qui détecte de manière sonore des données auxiliaires présentées de manière sonore dans la publicité.

12. Support non transitoire lisible par ordinateur selon l'une quelconque des revendications 9 à 11, dans lequel le premier signal est reçu au niveau du ou des processeurs (502) en provenance d'un dispositif de détection (102) par l'intermédiaire duquel un signal de diffusion contenant la publicité est transmis à une télévision (106) afin de présenter le signal de diffusion et la publicité.
